# EUROPÄISCHE PATENTSCHRIFT

(11) **EP 3 045 744 B1**
(45) Veröffentlichungstag und Bekanntmachung des Hinweises auf die Patenterteilung: **22.01.2020**
(21) Anmeldenummer: 15202948.4
(22) Anmeldetag: 29.12.2015
(51) Int. Cl.: F16B 37/04, F16B 12/24

(54) **BEFESTIGUNGSEINRICHTUNG**
FIXING DEVICE
DISPOSITIF DE FIXATION

(30) Priorität: 15.01.2015 DE 202015000344 U
(43) Veröffentlichungstag der Anmeldung: 20.07.2016
(73) Patentinhaber: Grass GmbH, 6973 Höchst (AT)
(72) Erfinder: Grabher, Günter, 6972 Fußach (AT)
(74) Vertreter: Patentanwälte Magenbauer & Kollegen Partnerschaft mbB

(56) Entgegenhaltungen:
- EP-A2- 2 474 750
- DE-A1- 19 916 989
- DE-A1-102009 021 326
- GB-A- 842 566

## Beschreibung

Die Erfindung betrifft eine Befestigungseinrichtung, mit einem Befestigungselement geringer Wandstärke, beispielsweise Befestigungsplättchen oder Befestigungsscheibe zur Befestigung an einem anderen Bauteil, mit wenigstens einem Befestigungsloch zur Durchführung eines Befestigungsgliedes, das mit seiner Außenfläche an einer eine Anlagefläche bildenden Innenwandung des Befestigungslochs in Anlage bringbar ist, wobei zur Vergrößerung der Anlagefläche die Innenwandung in Axialrichtung des Befestigungsloches durch wenigstens eine Lasche verlängert oder verlängerbar ist.

Befestigungseinrichtungen mit geringen Wandstärken dienen üblicherweise dazu, ein erstes Bauteil an einem anderen Bauteil starr oder beweglich zu befestigen. Hierfür durchgreift ein Befestigungsglied das eine Bauteil und greift in das andere Bauteil ein, und wird in diesem mittels eines Befestigungselements fixiert. Hierfür ist es aber erforderlich, dass das andere Bauteil für als Befestigungselement eine genügend große Wandstärke besitzt, so dass das Befestigungselement am Bauteil befestigt werden und das Befestigungsglied in diesem Befestigungselement sich verankern kann. Scheibenförmige Befestigungselemente sind in der Regel hierfür nicht geeignet, da sie üblicherweise nur an der Oberseite des Bauteils aufliegen, in das Bauteil aber nicht eingreifen. Das Befestigungsglied durchgreift dann die Anlagefläche der Innenwandung des Befestigungslochs des Befestigungselemente angreift. Ein Halt gegen Ausreißen wird dabei aber nicht gewährleistet.

Die DE 199 16 989 A1 zeigt ein als Tellerfeder ausgebildetes Spannelement mit Axialstegen.

Der Erfindung liegt nunmehr die Aufgabe zugrunde, eine Befestigungseinrichtung der eingangs genannten Art bereitzustellen, bei welcher das Befestigungsglied auch bei einem scheibenförmigen Befestigungselement mit guter Sicherheit fixierbar ist, ohne dass hierfür zusätzliche Elemente erforderlich sind.

Diese Aufgabe wird erfindungsgemäß dadurch gelöst, dass die wenigstens eine Lasche zwischen einer Ausgangsstellung, in der sie in radialer Richtung in den freien Öffnungsquerschnitt des Befestigungslochs hinein ragt, und einer Anlagestellung, in der sie sich in Axialrichtung erstreckt, biegbar ist, wobei die Lasche derart ausgebildet ist, dass sie durch das Einführen des Befestigungsgliedes von der Ausgangsstellung in die Anlagestellung biegbar ist.

Um die Außenfläche des Befestigungsgliedes, z.B. dem Gewinde einer Schraube, eine genügend große Anlagefläche an der Innenwandung des Befestigungselements zu bieten, weist das Befestigungselement wenigstens eine Lasche auf, welche in Axialrichtung des zu befestigenden Befestigungsgliedes, also auch in Axialrichtung des Befestigungsloches, verlängert oder verlängerbar ist und somit aus der Ebene des scheibenförmigen Befestigungselements heraus und in das Befestigungsloch hineinragt. Hierdurch wird die Dicke des Befestigungselements vergrößert, da die Lasche aus der Ebene herausgebogen und dadurch die Anlagefläche der Innenwandung vergrößert wird. Die Außenfläche des Befestigungsgliedes erhält hierdurch die erforderliche Berührungsfläche. So können z.B. bei einer Schraube genügend viele Gewindegänge in das Material der Lasche des Befestigungselements, d.h. der Innenwandung der Lasche, eingreifen. Das Befestigungselement ist also nicht mehr zweidimensional, also scheibenförmig, sondern dreidimensional ausgebildet, da die Lasche aus der Ebene der Scheibe herausragt.

Ein Umbiegen der wenigstens einen Lasche wird dadurch möglich, dass das Material des Befestigungselements aus einem zähen Werkstoff, insbesondere Stahl, Aluminium, Kupfer oder dergleichen besteht, und daher relativ einfach verformbar ist. Auch bei hochelastischen Kunststoffen kann die Lasche in das Befestigungsloch beim Einsetzen des Befestigungsglieds umgebogen werden.

Insbesondere bei einem aus einem zähen Material bestehenden Befestigungselement ist die wenigstens eine Lasche zwischen einer Ausgangsstellung, in der sie in radialer Richtung in den freien Öffnungsquerschnitt des Befestigungsloches hineinragt, und einer Anlagestellung, in der sie sich in Axialrichtung erstreckt, biegbar bzw. umbiegbar. Das Befestigungselement ist also in seiner Ausgangslage eben ausgebildet, wobei die wenigstens eine Lasche sich zunächst einmal in dieser Ebene befindet. Aus dieser Ebene wird die Lasche dann heraus gebogen und erstreckt sich dann in Axialrichtung, in der sie dann die Anlagestellung einnimmt.

Erfindungsgemäß ist die Lasche derart ausgebildet, dass sie durch das Einführen des Befestigungsglieds von der Ausgangsstellung in die Anlagestellung biegbar oder umbiegbar ist. Es bedarf also keines zusätzlichen Arbeitsschrittes, da die Lasche automatisch beim Einführen des Befestigungsgliedes aus der Ebene des scheibenförmigen Befestigungselements herausgebogen wird und dann an der Außenwand des Befestigungselements anliegt.

Ein Ausführungsbeispiel hat zum Inhalt, dass mehrere, insbesondere mit gleichen Abständen zueinander ausgerichtete Laschen vorgesehen sind. Diese mehreren Laschen liegen dann nach dem Umbiegen an der Außenwand bzw. an der Außenfläche des Befestigungsgliedes an und halten an diesem, da sie gleiche Abstände zueinander aufweisen, sicher fest. Das Befestigungsglied kann in keine Richtung ausweichen, insbesondere nicht, wenn die Laschen gleiche Winkelabstände zueinander aufweisen.

Bevorzugte Weiterbildungen der Erfindung sehen vor, dass die wenigstens eine Lasche eine rechteckförmige, runde, elliptische, trapezförmige oder quadratische Grundform aufweist. Die rechteckförmige Grundform ist relativ einfach herstellbar, wobei das Befestigungselement z.B. mittels eines Stanzvorganges aus einer Metalltafel erzeugt wird. Bei runden und elliptischen Grundformen kann die Anlagefläche der Lasche zur Optimierung am Befestigungsglied so angepasst sein, dass sie z.B. unter Vorspannung anliegt oder beim Einschieben oder Eindrehen des Befestigungsglieds weniger stark an diesem anliegt, als beim herausziehen oder ausdrehen. Insbesondere bei einem aus Blech bestehenden Befestigungselement, bei welchem gegebenenfalls auch die Lasche mit einer dünneren Dicke ausgebildet sein kann, ist die Verformung beziehungsweise Umbiegung der Lasche leicht und auch ohne zusätzliche Werkzeuge, z.B. lediglich durch das Einstecken des Befestigungsgliedes durchführbar.

Bei einer bevorzugten Ausführungsform der Erfindung besteht das Befestigungselement und vorzugsweise die wenigstens eine Lasche aus Blechmaterial. Derartige Befestigungselemente sind einerseits zäh und können große Kräfte übertragen, andererseits sind sie relativ flach und tragen nur unwesentlich über dem Befestigungsloch auf.

Bei einer Weiterbildung der Erfindung ist vorgesehen, dass wenigstens ein Befestigungsglied, beispielsweise ein Stift, Dübel oder Bolzen, das Befestigungsloch durchsetzt und in Anlage mit der Anlagefläche des Befestigungselements liegt. Die Lasche greift also direkt am Befestigungsglied an, wobei das Befestigungsglied als Stift, Bolzen oder Schraube ausgebildet ist, es kann aber auch als Dübel ausgebildet sein, in welches ein weiteres Halteelement eingreift.

Die Erfindung betrifft auch ein Möbel, mit einem Möbelkorpus und einem über eine Führungseinrichtung relativ zum Möbelkorpus geführten bewegbaren Möbelteil, insbesondere einer Schublade, Tür oder Klappe, wobei das Möbel eine Befestigungseinrichtung aufweist, die die oben sowie nachfolgend genannten Merkmale besitzt.

Weitere Vorteile, Eigenschaften und Merkmale der Erfindung ergeben sich aus den Ansprüchen sowie der nachfolgenden Beschreibung in der unter Bezugnahme auf die Zeichnung bevorzugte Ausführungsbeispiele im Einzelnen beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung
Figur 1 eine perspektivische Ansicht eines als Befestigungsscheibe ausgebildeten Befestigungselements;
Figur 2 eine perspektivische Ansicht einer zweiten Ausführungsform der Erfindung mit am Befestigungselement umgebogenen Laschen;
Figur 3 eine perspektivische Ansicht des Befestigungselements gemäß Figur 2 mit eingesetztem Dübel;
Figur 4 eine Draufsicht auf eine dritte Ausführungsform eines Befestigungselements;
Figur 5 eine perspektivische Darstellung des Befestigungselements gemäß Figur 4 mit abgebogenen Laschen.

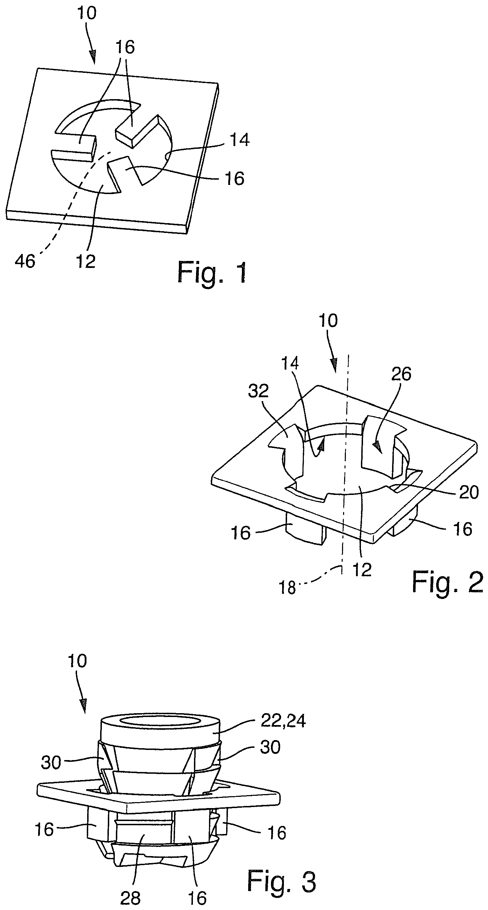

In der Figur 1 ist ein Befestigungselement 10 dargestellt, welches scheibenförmig ausgebildet ist und z.B. von einem Blechmaterial ausgestanzt wurde. Das Befestigungselement 10 besitzt ein Befestigungsloch 12, welches einen teilkreisförmigen Rand 14 aufweist. Von diesem Rand 14 ragen radial drei rechteckförmige Laschen 16 in Richtung des Zentrums 46 ab. Das Befestigungselement 10 ist mit seinen Laschen 16 eben ausgebildet.

In der Figur 2 ist ein zweites Ausführungsbeispiel eines Befestigungselements 10 dargestellt, wobei am Rand 14 des Befestigungsloches 12 vier Laschen 16 angeordnet sind, und die Laschen 16 derart am Rand 14 umgebogen sind, dass sie sich in Richtung der Achse 18 des Befestigungsloches 12 erstrecken. Dabei sind die Laschen 16 am Rand 14 geringfügig in radialer Richtung eingeschnitten, so dass jede Lasche 16 am Schnittrand 20 umgebogen werden kann. Die Laschen 16 erstecken sich nunmehr aus der ursprünglichen Ebene des Befestigungselements 10 heraus.

Wie aus Figur 3 ersichtlich, wird zwischen die einzelnen Laschen 16 ein als Dübel 22 ausgebildetes Befestigungsglied 24 eingedrückt, das von der Innenwandung 26 der Laschen 16 gehalten wird. Dabei liegt die Innenwandung 26 einer jeden Lasche 16 an der Außenfläche 28 des Dübels 22 an und hält diesen gegen Verdrehen fest. An der Außenfläche 28 des Dübels 22 können zudem axialen Nuten vorgesehen sein, in welche die Laschen 16 geringfügig eingreifen, wodurch eine innige Verbindung von Befestigungsglied 24 und Befestigungselement 10 erreicht wird.

An der sichtbaren Außenseite des Befestigungsgliedes 24 befinden sich Nase 30, die auf das Knie 32 der Lasche 16 drücken, wodurch ein weiterer Einschub des Befestigungsgliedes 26 in das Befestigungsloch 12 verhindert wird. In den Dübel 22 kann nun ein Stift, eine Schraube, ein Zapfen oder dergleichen eingeschoben, eingedreht oder eingeschlagen werden. Dabei spielt das Material des Stiftes, der Schraube oder des Bolzens keine Rolle, wohingegen der Dübel 22 vorzugsweise aus Kunststoff und das Befestigungselement 10 vorzugsweise aus Metall, insbesondere Stahl bestehen.

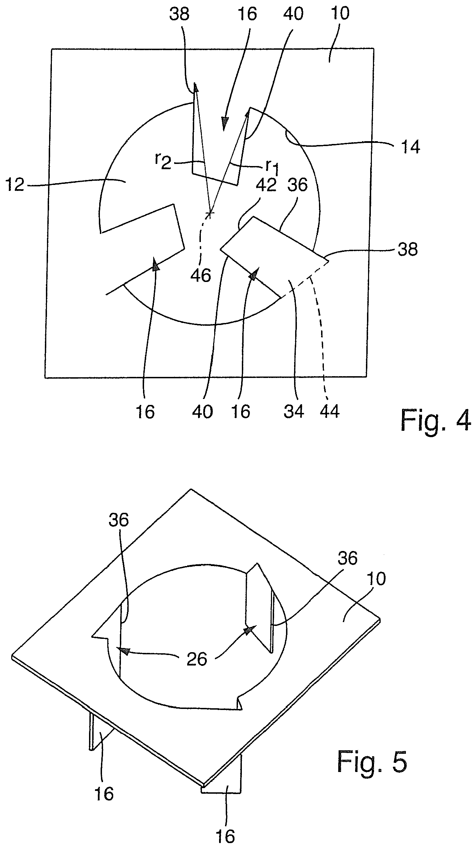

Bei in der in den Figuren 4 und 5 dargestellten dritten Ausführungsbeispiel weist das Befestigungselement 10, welches, wie aus Figur 4 ersichtlich, ebenfalls scheibenförmig ausgebildet ist, drei Laschen 16 auf, deren Fuß 34 an einer Seite 36 einen relativ tiefen Einschnitt 38 aufweist. Die gegenüberliegende Seite 40 ist nicht oder nur geringfügig eingeschnitten. Außerdem verläuft die Stirnkante 42 der Lasche 16 in etwa parallel zur Fußkante 44. Es ist erkennbar, dass die Tiefe des Einschnitts 38 einen größeren Radius (r₂) aufweist, als der Radius (r₁) am Ende der Seite 40 am Übergang zum Rand 14 .

Werden die Laschen 16, wie in Figur 5 dargestellt, umgebogen, dann verlaufen diese, nicht tangential, wie beim in Figur 2 dargestellten Ausführungsbeispiel, sondern sind leicht gedreht, so dass die Seite 36 aufgrund des kleineren Radius r₁ näher zum Zentrum 46 liegt, als die Seite 40. Hierdurch wird der Vorteil erzielt, dass das in das Befestigungsloch 12 eingedrehte Befestigungsglied 24 oder ein Dübel 22 von den Seiten 36 gegen ein Herausdrehen festgehalten wird, wenn das Befestigungsglied 24 bzw. der Dübel 22 ungewollt entgegen der Eindrehrichtung verdreht wird. Die Innenwandung 26 bilden demnach gewissermaßen Wiederhaken. Liegen die Laschen 16 in an der Außenfläche 28 des Dübels 22 vorgesehenen Axialnuten an, dann stützt sich die Seite 36 an der Nutwand ab und die Lasche 16 liegt mit ihrer Innenwandung 26 an der Außenfläche 28 der Nut und somit am Dübel 22 an. Das Befestigungsglied 24 kann somit in erfindungsgemäßer Weise an relativ flachen, scheibenförmigen Gegenständen mit hoher Kraft befestigt werden.

## Patentansprüche

1. Befestigungseinrichtung, mit einem Befestigungselement (10) geringer Wandstärke, beispielsweise Befestigungsplättchen oder Befestigungsscheibe zur Befestigung an einem anderen Bauteil, mit wenigstens einem Befestigungsloch (12) zur Durchführung eines Befestigungsgliedes (24), das mit seiner Außenfläche (28) an einer eine Anlagefläche bildenden Innenwandung (26) des Befestigungslochs (12) in Anlage bringbar ist, wobei zur Vergrößerung der Anlagefläche die Innenwandung (26) in Axialrichtung des Befestigungsloches (12) durch wenigstens eine Lasche (16) verlängert oder verlängerbar ist, **dadurch gekennzeichnet, dass** die wenigstens eine Lasche (16) zwischen einer Ausgangsstellung, in der sie in radialer Richtung in den freien Öffnungsquerschnitt des Befestigungslochs (12) hinein ragt, und einer Anlagestellung, in der sie sich in Axialrichtung erstreckt, biegbar ist, wobei die Lasche (16) derart ausgebildet ist, dass sie durch das Einführen des Befestigungsgliedes (24) von der Ausgangsstellung in die Anlagestellung biegbar ist.

2. Befestigungseinrichtung nach Anspruch 1, **dadurch gekennzeichnet, dass** mehrere, insbesondere mit gleichen Abständen zueinander ausgerichtete Laschen (16) vorgesehen sind.

3. Befestigungseinrichtung nach einem der vorhergehenden Ansprüche, **dadurch gekennzeichnet, dass** die wenigstens eine Lasche (16) eine rechteckförmige, runde, elliptische, trapezförmige oder quadratische Grundform aufweist.

4. Befestigungseinrichtung nach einem der vorhergehenden Ansprüche, **dadurch gekennzeichnet, dass** das Befestigungselement (10) und vorzugsweise die wenigstens eine Lasche (16) aus Blechmaterial besteht.

5. Befestigungseinrichtung nach einem der vorhergehenden Ansprüche, **gekennzeichnet durch** wenigstens ein Befestigungsglied (24), beispielsweise Stift, Dübel (22) oder Bolzen, das das Befestigungsloch (12) durchsetzt und in Anlage mit der Anlagefläche des Befestigungselementes (10) liegt.

6. Möbel, mit einem Möbelkorpus und einem über eine Führungseinrichtung relativ zum Möbelkorpus geführten bewegbaren Möbelteil, insbesondere Schublade, Tür oder Klappe, **gekennzeichnet durch** eine Befestigungseinrichtung nach einem der Ansprüche 1 bis 5.

## Claims

1. Mounting device, with a mounting element (10) of lesser wall thickness, for example a small mounting plate or a mounting disc, for fixing to another part, with at least one mounting hole (12) through which may pass a mounting member (24), the outer surface (28) of which may be brought into contact with an inner wall (26) of the mounting hole (12) forming a contact surface wherein, to increase the contact surface, the inner wall (26) is or may be extended in the axial direction of the mounting hole (12) by at least one tab (16), **characterised in that** the tab or tabs (16) may be bent between an initial position in which it or they extend radially into the free opening cross-section of the mounting hole (12), wherein the tab (16) is so designed that it may be bent through the insertion of the mounting member (24) from the initial position into the contact position.

2. Mounting device according to claim 1, **characterised in that** several tabs (16) are provided, in particular aligned at the same distance from one another.

3. Mounting device according to any of the preceding claims, **characterised in that** the tab or tabs (16) has or have a rectangular, round, elliptical, trapezoidal or square basic shape.

4. Mounting device according to any of the preceding claims, **characterised in that** the mounting element (10) and preferably the tab or tabs (16) are made of sheet metal material.

5. Mounting device according to any of the preceding claims, **characterised by** at least one mounting member (24), for example a pin, dowel (22) or bolt, which passes through the mounting hole (12) and lies in contact with the contact surface of the mounting element (10).

6. Piece of furniture with a furniture carcass and a movable furniture part, in particular a drawer, door or flap, guided relative to the furniture carcass by a guiding device, **characterised by** a mounting device according to any of claims 1 to 5.

## Revendications

1. Dispositif de fixation, avec un élément de fixation (10) à parois de faible épaisseur, par exemple une plaquette de fixation ou une rondelle de fixation, destiné à être fixé au niveau d'un autre composant, avec au moins un trou de fixation (12) servant à faire passer un organe de fixation (24), qui peut être amené en appui par sa surface extérieure (28) au niveau d'une paroi intérieure (26), formant une surface d'appui, du trou de fixation (12), dans lequel pour agrandir la surface d'appui, la paroi intérieure (26) est rallongée ou peut être rallongée dans la direction axiale du trou de fixation (12) par au moins une bride (16), **caractérisé en ce que** l'au moins une bride (16) peut être cintrée entre une position de départ, dans laquelle elle dépasse dans la direction radiale à l'intérieur de la section transversale d'ouverture libre du trou de fixation (12), et une position d'appui, dans laquelle elle s'étend dans la direction axiale, dans lequel la bride (16) est réalisée de telle manière qu'elle peut être cintrée par le passage de l'organe de fixation (24) depuis la position de départ dans la position d'appui.

2. Dispositif de fixation selon la revendication 1, **caractérisé en ce que** sont prévues plusieurs brides (16) en particulier orientées les unes par rapport aux autres à distances égales.

3. Dispositif de fixation selon l'une quelconque des revendications précédentes, **caractérisé en ce que** l'au moins une bride (16) présente une forme de base de forme rectangulaire, ronde, elliptique, de forme trapézoïdale ou carrée.

4. Dispositif de fixation selon l'une quelconque des revendications précédentes, **caractérisé en ce que** l'élément de fixation (10) et de préférence l'au moins une bride (16) sont constitués d'un matériau en tôle.

5. Dispositif de fixation selon l'une quelconque des revendications précédentes, **caractérisé par** au moins un organe de fixation (24), par exemple une tige, une cheville (22) ou un boulon, qui traverse le trou de fixation (12) et est en appui avec la surface d'appui de l'élément de fixation (10).

6. Meuble avec un corps de meuble et une partie de meuble pouvant être déplacée guidée par rapport au corps de meuble par l'intermédiaire d'un dispositif de guidage, en particulier un tiroir, une porte ou un abattant, **caractérisé par** un dispositif de fixation selon l'une quelconque des revendications 1 à 5.
